# EUROPEAN PATENT APPLICATION

(11) **EP 2 574 998 A1**
(43) Date of publication of application: **03.04.2013**
(21) Application number: 12008268.0
(22) Date of filing: 14.12.2006
(51) Int. Cl.: G05B 19/414

(54) **Process for moving a robot**

(30) Priority: 20.12.2005 US 313179
(62) Divisional of application: 06025906.6
(71) Applicant: KUKA Laboratories GmbH, 86165 Augsburg (DE)
(72) Inventor: Mirza, Khalid, Troy, MI 48098 (US); Volcic, Ed, Rochester Hills, MI 48307 (US); Klueger, Peter, 86391 Stadtbergen (DE); Bunsendal, Jens, 97828 Marktheidenfeld (DE)
(74) Representative: Schlotter, Alexander Carolus Paul

(57) **Abstract**

A process for moving a robot, especially an articulated arm robot, in which motions of axes of the robot are synchronized with a primary motion. In particular, positions of the axes are assigned to the position of the primary motion via a path table.

## Description

### FIELD OF THE INVENTION

The present invention pertains to a process for moving a robot, especially an articulated robot such as an articulated arm industrial robot.

### BACKGROUND OF THE INVENTION

A robot as a robot according to EN ISO 8373, subsection 2.6 is controlled, in principle, by means of position control or continuous path control, wherein the motion processes are programmed by teach-in or off-line programming. The different axes of a robot are synchronized, in principle, by each axis moving to a reference point in order for the control to be able to assign the current position of the motor armature to an angle of articulation, i.e., a displacement takes place into a reference position, in which incremental measured values of the articulation coordinates are adapted to the robot control. A synchronization is optionally carried out in the same manner with an external axis of motion.

On the one hand, this does not permit a synchronous simulation of all motions, and, on the other hand, such a synchronization lacks sufficient reliability and accuracy over the entire path.

### SUMMARY OF THE INVENTION

The basic object of the present invention is therefore to provide a process by means of which the entire motion process can be simulated and reliable synchronization is possible.

The object is accomplished according to the present invention with a process of the type described in the introduction, which is **characterized in that** motions of axes of the robot are synchronized with a primary motion.

Provisions are made in a preferred embodiment for positions of the axes to be assigned to the position of the primary motion via a path table. Accordingly, positions or the independent axes of the robots, for example, of the axes A1 through A6, are assigned in such a path table to a position of the primary motion, such as the motion of the entire robot in space, be it preferably on a turntable with an axis of rotation as the primary axis or also a linear motion of the robot or another motion in space in a matrix-like manner, i.e., for example, to a position S1 of the primary motion positions A₁₁ (first position of the first robot axis), A₂₁, A₆₁ (first position of the sixth axis), of the position Sₙ of the basic motion, the robot axis positions A₁ₙ (end position of the first robot axis), A₂ₙ , ..., A₆ₙ (end position of the sixth robot axis). The motions of the axes of the robot, which depend on the primary motion, can also be called secondary motions and the corresponding axes (A₁ through A₆) can be called secondary axes. Insofar as the primary motions take place about or along an axis, this can be called a primary axis.

In a preferred embodiment, the positions are checked especially by means of position encoders provided in the path of motion of the primary motion, such as, i.e., a primary axis.

As was stated above, the primary motion may be that of a primary axis, wherein the latter may be an axis of the robot or an axis defining a motion of the entire robot; the primary axis may be an axis of rotation about which the entire robot moves, or else a linear axis, along which the entire robot moves.

Due to the solution according to the present invention, the dependent motions of the robot axes are connected in a cam-like manner with the primary motion and follow a path, which is determined by the positions of the primary motion. The path of motion defines the position, the velocity and the acceleration of the robot or the axes thereof at any given point during the entire motion. The synchronous motion may be programmed off-line by means of a simulation tool in the path table. The present invention offers the advantage that there is a high level of flexibility for creating different motion paths or pathways and the user can make a selection from among a plurality of paths or pathways.

The motion of the robot and consequently the position of the robot is exactly coupled with the primary motion and consequently in the position along same as in the case of a mechanical cam.

Within the framework of the present invention, each position of the robot follows that preset in the path table. The robot control reaches a position from the path table during each interpolation cycle and moves the robot into the position read. The path table defines both the geometric shape of the path and the motion profile, which the robot performs during the performance of the motion over the path.

Other advantages and features of the present invention appear from the claims and the following description, in which exemplary embodiments of the present invention are specifically explained with reference to the drawings. The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which a preferred embodiment of the invention is illustrated.

### BRIEF DESCRIPTION OF THE DRAWINGS

In the drawings:

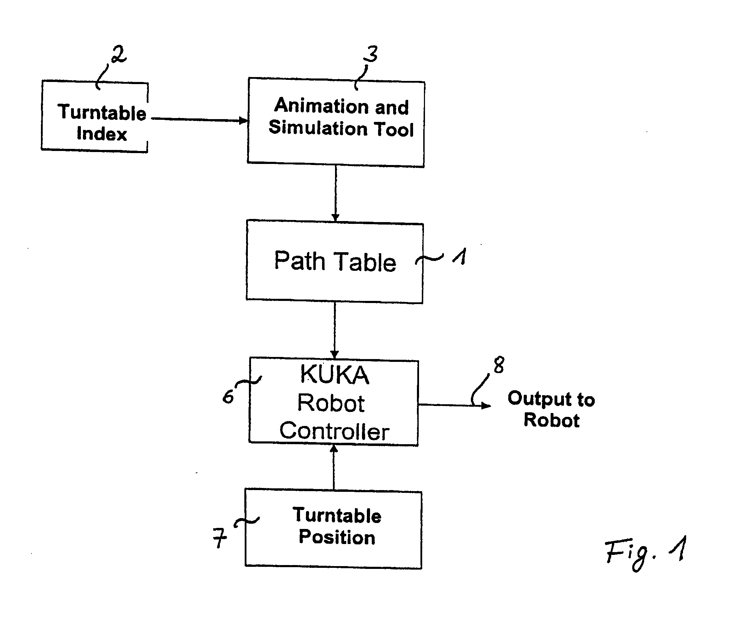

Figure 1 is a synoptic view of the generation of a path table and the use of the path table for controlling a robot;
Figure 2 is a view of the assignment of the robot motion to the principal motion as a function of the time and the representation thereof in a path table;
Figure 3 is a view of the robot control;
Figure 4 is a block diagram of the control process of a robot during the monitoring of the motion in the robot control; and
Figure 5 is a block diagram of the motion control process of a robot during monitoring in a separate, memory-programmable control (PLC).

### DESCRIPTION OF THE PREFERRED EMBODIMENTS

Referring to the drawings in particular, the core element of the control of a robot R according to the present invention is a so-called path table 1, which is generated off-line by one or more programmers taking into account - in the exemplary embodiment being shown - turntable information 2, i.e., the information on the position of the turntable by means of an animation and simulation tool 3. The motion of the turntable is the motion about a principal axis, about which the robot moves, for example, eccentrically (as in the case of a carousel), while the motions of the robot axes, six axes in a conventional robot, depend on the principal motion of the turntable.

Instead of a turntable axis as the principal axis, a linear axis may be provided as well. Moreover, the basic motion may also be a more complex motion than a rotary motion about a principle axis or than a linear motion along a principal axis; what is essential is a preset path of motion with positions of the principal motion, to which positions of the rotor axes can be assigned.

When the motion profile is generated, the path of motion of the robot arm, more specifically the TCP (Tool Center Point) of the robot, is determined at first, and the process motion is determined next along this path, taking into account velocities and accelerations, and the path table is finally generated.

The entire motion of the robot can thus be simulated by means of the animation/simulation tool 3.

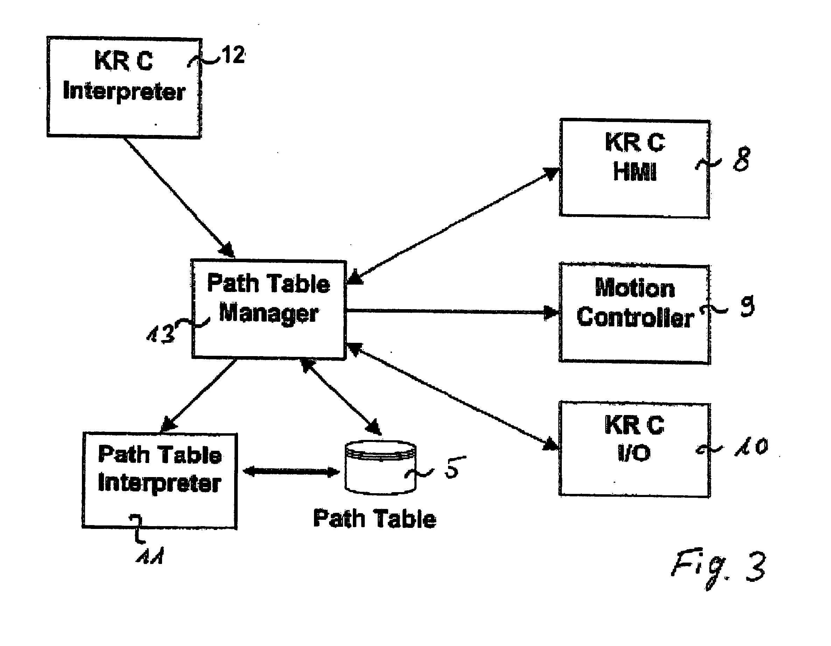

A row of the path table is assigned to each index position of the principle axes in Table 1 and it contains the associated robot position. To control a robot, the path table 1 is fed into the robot control 6, for example, from an external memory 5 (Figure 3), and the robot control polls the turntable position 7 during each interpolation cycle and sends control commands to the robot based on this for actuating the actuators of the robot and consequently for positioning the robot axes and the components of the robot via an output 8.

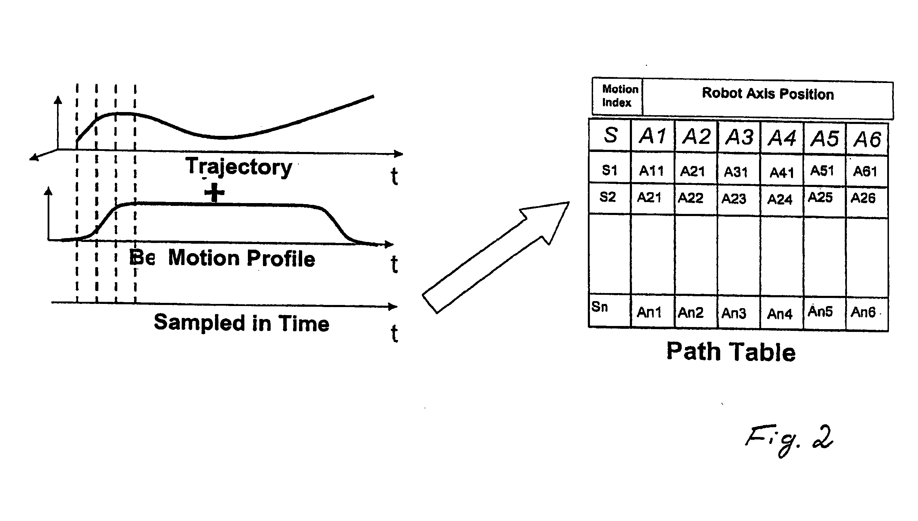

Figure 2 shows first on the left-hand side a trajectory and motion profile of a robot, which is sampled in time corresponding to the motion index of the principal axis and is shown by vertical broken lines. The motion of the principal motion, e.g. the turntable over time, is thus used as an index to sample robot motion over time. Positions of the robot axes A1 through A6 are assigned at individual positions S1, S2, ... Sn of the principal axis in the path table shown in the right-hand part of Figure 2, i.e., for example, the robot axis positions Aₙ (first position of the first axis), A₁₂ , ... A₁₆ , are assigned to the position S1 of the basic motion, the robot axis positions A₂₁....A₂₆, are assigned to S2, etc. and, finally, the robot axis positions Aₙ₁ (end position of the first robot axis), Aₙ₂ ..... Aₙ₆ are assigned to position Sn of the basic motion. The positions of the turntable that are linked with the index position in the path table are used for moving the robot into the desired position determined in advance. To ensure that the motion thus arising is as smooth as possible, the path table must have a high resolution, so that each position of the turntable has a corresponding position of the robot and can be transferred to the robot control during each interpolation cycle.

Figure 3 shows a more detailed view of the robot control 6. This is connected at first to an external mass storage unit 5, in which the path table generated off-line is stored. An interpreter for the robot control, a human-machine interface (HMI) 8 with screen as well as keyboard and/or mouse are assigned. Furthermore, a control output 9 to the robot is provided. Moreover, additional inputs and outputs 10 are provided, for example, for receiving external sensor signals, such as signals from sensors and encoders.

Moreover, the robot control also has a path table interpreter 11 and a path table manager 13.

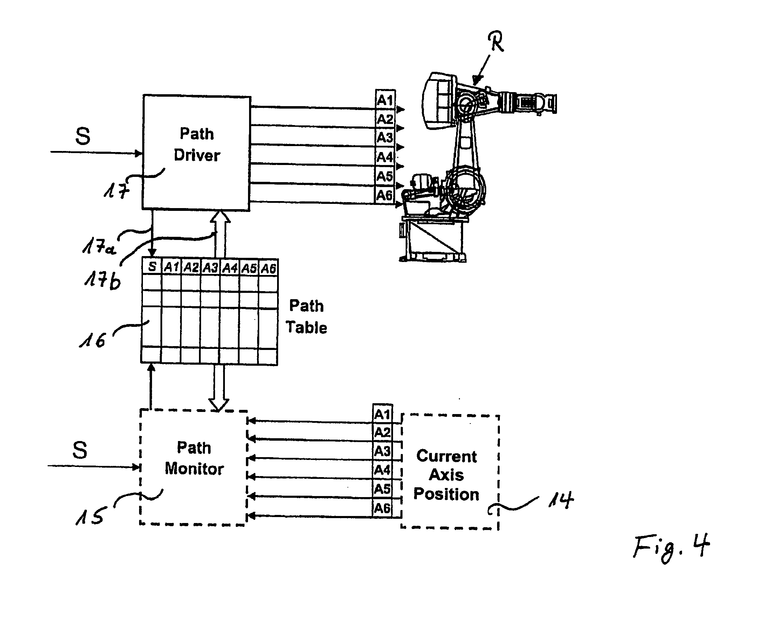

As can be determined from Figure 4, the path table generated off-line is analyzed by means of the path table interpreter 11, checked for syntactic correctness, converted into a machine-readable form. A robot position each is assigned in the table to defined positions of the principal axes. The path table manager 13 of the robot control 6 is responsible for the initialization and coordination of the execution of the path table 16 and polls, as was stated before, the position (here of the turntable), which is determined by the principal or basic motion, reads the corresponding position of the robot or more accurate positions of the robot axes from the path table and actuates these via the output 9 and gives the actuators (motors) of the robot the command to bring the corresponding robot axes A1 through A6 into the position determined by the path table. The positions of the robot axes are monitored by a monitoring module 14 and are compared as actual positions of the axes with the desired positions of the axes preset by the path table 16 by means of a path monitor 15, after which a safety check can be made whether the robot is on the desired path. The path driver receives for this the position S of the principal axis transmitted to it and uses this information to index into the table through 17a and obtains the desired robot position 17b as a result. In summary, the process is as follows:
1. The robot interpreter executes a robot program.
2. This robot program contains a special instruction, which transfers the control to the path table, e.g., with the indication of the path table to be run.
3. The path table manager loads the corresponding table and begins processing the table.
4. Corresponding to the position of the principal axis, it takes the corresponding robot position from the table with the processing and sends a displacement command to the motion controller. The position of the principal axis can be transferred, e.g., via I/Os (e.g., Inputs, Outputs 10).
5. The control passes again over to the robot interpreter with the processing of the table.
6. For example, the current table and the status of processing of that table can be visualized via the HMI.

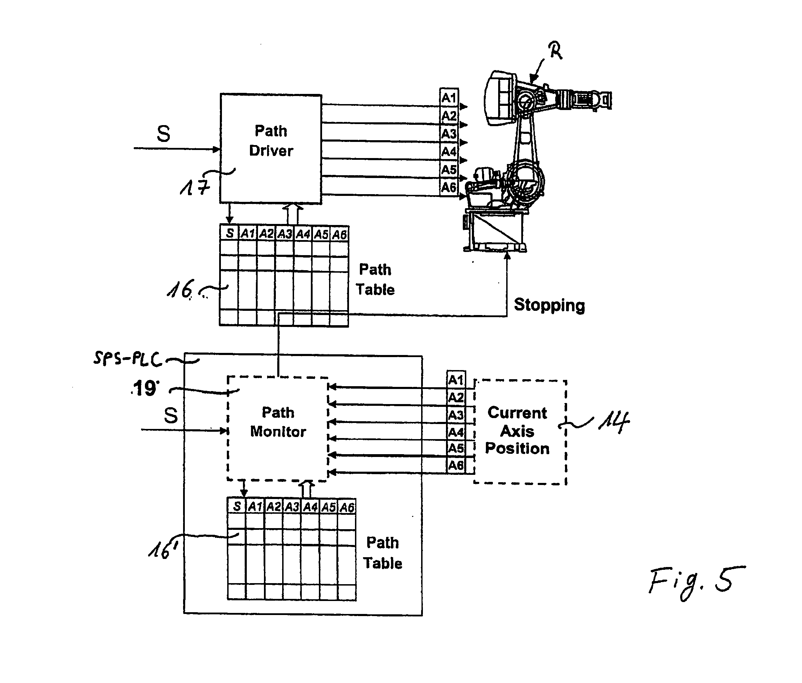

In addition or as an alternative, the axis position can also be used to monitor the security of the motion path of the robot, as this is shown in Figure 5, the monitoring being performed, for example, in a memory-programmable control (PCSPS-PLC) with a path monitor 15, the second copy of the path table 16 being stored in this control, and the actual axis position being compared via a security path monitor 19 with the actual position preset by the path table 16' and, if necessary, the motion can be stopped, it is possible to move into a safe position, or the like.

While specific embodiments of the invention have been shown and described in detail to illustrate the application of the principles of the invention, it will be understood that the invention may be embodied otherwise without departing from such principles.

## Claims

1. A process for moving a robot having motion aspects and further robot axes of motion, the process comprising:
designating a motion aspect of the robot as a primary motion; and synchronizing motions of axes of the robot with the primary motion.

2. A process in accordance with claim 1, wherein the primary motion is the motion of a primary axis.

3. A process in accordance with claim 2, wherein the primary axis is an axis of the robot.

4. A process in accordance with claim 2, wherein the primary axis is an external axis that defines a motion of the entire robot.

5. A process in accordance with one of claims 2 to 4, wherein the primary axis is an axis of rotation, about which the entire robot moves.

6. A process in accordance with one of the claims 2 to 4, wherein the primary axis is a linear axis.

7. A process in accordance with one of claims 1 to 6, wherein the motions of axes of the robot include secondary axes and the synchronization of the motion of the secondary axes with the primary motion includes using position encoders provided at the path of the primary motion.

8. A process in accordance with one of claims 1 to 7, wherein positions of the axes are assigned to the position of the primary motion via a path table.

9. A process in accordance with one of claims 1 to 8, wherein the primary motion is the motion of a point along the robot, with such brought about by movement of the entire robot or some portion thereof.

10. A process for moving a robot, the process comprising:
providing an articulated arm robot with robot movement aspects including an entire robot movement motion aspect and motion aspects as to movement about each of a plurality of robot axes:
designating a motion aspect of the robot as a primary motion; and
synchronizing motions of axes of the robot with the primary motion.

11. A process in accordance with claim 10, wherein the primary motion is the motion of a primary axis.

12. A process in accordance with claim 11, wherein the primary axis is an axis of the robot.

13. A process in accordance with claim 11, wherein the primary axis is an external axis that defines entire robot movement motion aspect for motion of the entire robot.

14. A process in accordance with one of claims 11 to 13, wherein the primary axis is an axis of rotation, about which the entire robot moves providing said entire robot movement motion aspect.

15. A process in accordance with one of claims 11 to 13, wherein the primary axis is a linear axis.

16. A process in accordance with one of claims 10 to 15, wherein the motions of axes of the robot include secondary axes and the synchronization of the motion of the secondary axes with the primary motion includes using position encoders provided at the path of the primary motion.

17. A process in accordance with claim 16, wherein positions of the axes are assigned to the position of the primary motion via a path table.

18. A process in accordance with one of claims 10 to 17, the process comprising:
providing a system with an articulated arm robot with robot movement aspects including an entire robot movement motion aspect and motion aspects as to movement about each of a plurality of robot axes:
providing another device having motion aspects;
designating a motion aspect of the robot or another device as a primary motion;
synchronizing motions of axes of the robot with the primary motion

19. A process in accordance with claim 18, wherein the another device is another articulated arm robot and said primary motion is the motion of an axis of one of said articulated arm robot and another articulated arm robot.

20. A process in accordance with claim 18 or 19, wherein the primary motion is the motion of a point along one of said articulated arm robot and another articulated arm robot, with such brought about by movement of the entire said articulated arm robot or said another articulated arm tobot or some portion thereof.
